(19) Europäisches Patentamt
European Patent Office
Office européen des brevets

(11) Publication number: 0 053 366
B1

(12) # EUROPEAN PATENT SPECIFICATION

(45) Date of publication of patent specification: 21.01.87

(51) Int. Cl.[4]: C 08 G 59/50, C 07 C 87/34

(21) Application number: 81109936.5

(22) Date of filing: 26.11.81

(54) **Process for hardening a bisphenol A type epoxy resin.**

(30) Priority: 28.11.80 JP 168372/80

(43) Date of publication of application:
09.06.82 Bulletin 82/23

(45) Publication of the grant of the patent:
21.01.87 Bulletin 87/04

(84) Designated Contracting States:
BE CH DE FR IT LI NL SE

(56) References cited:
EP-A-0 008 763
EP-A-0 019 893
DE-A-2 124 961
FR-A-1 255 246

**The file contains technical information submitted after the application was filed and not included in this specification**

(73) Proprietor: Takeda Chemical Industries, Ltd.
27, Doshomachi 2-chome Higashi-ku
Osaka-shi Osaka, 541 (JP)

(72) Inventor: Minato, Ichiro
4-14, Tsurukabuto 1-chome Nada-ku
Kobe Hyogo 657 (JP)
Inventor: Shibata, Koichi
1-444, 5 Wakaba-cho
Ashiya Hyogo 659 (JP)
Inventor: Furuoya, Itsuo
604, 33 Yamadanishi 3-chome
Suita Osaka 565 (JP)

(74) Representative: Bühling, Gerhard, Dipl.-Chem. et al
Patentanwaltsbüro Tiedtke-Bühling-Kinne
Grupe-Pellmann-Grams-Struif Bavariaring 4
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 053 366 B1

**Description**

The present invention relates to a method for hardening a bisphenol A type epoxy resin by hardening agents which have rapid cold hardening ability and high safety and which provide hardened products excellent in heat resistance.

Hitherto, aliphatic polyamines such as diethylenetriamine, triethylenetetramine, xylylenediamine, etc. have been generally used as rapid hardening agents for epoxy resins. The products hardened with these amines have some heat resistance, but mechanical properties of such products especially at high temperatures such as 120°C or higher are not necessarily satisfactory. Moreover, these amines have problems on safety to human bodies because they have relatively higher vapor pressures. Therefore, use of modified amines have been proposed, but these modified amines are liable to further decrease mechanical properties of the hardened products at high temperatures. Aromatic polyamines such as m-phenylenediamine, diaminodiphenylmethane, diaminodiphenyl sulfone, etc. provide hardened products excellent in mechanical properties at high temperatures, so that they are industrially widely used, but they have the defect that they cannot harden epoxy resins at normal temperatures.

From FR—A—1 255 246, a process for hardening an epoxy resin of bisphenol A type on the basis of a compound of poly(alphaaminomethyl)benzene is known, meta-xyloldiamine (XDA) being especially preferred. The epoxy resin and the amine is used in such an amount, that at least 4 and especially 4 to 25 hydrogen atoms of the amine groups per one epoxy group are present. Hardened epoxy resins obtained by using meta-xyloldiamine have relative low heat distortion temperatures and cannot be used at high temperatures of about 150°C.

In the prior European patent application EP—A—0 019 893 triamines on hardening agents for epoxy resins are described, which are represented by the formula

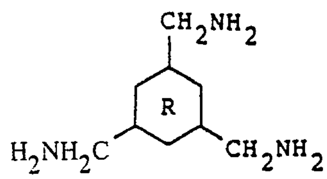 wherein 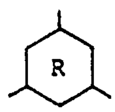 stands for 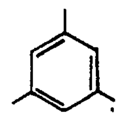 or 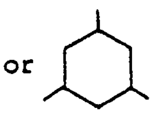.

The triamines can be used for hardening epoxy resins. In the publication the term epoxy resins covers a great number of polymers and is not specified in greater detail.

Object of the present invention is to provide a method for hardening a bisphenol A type epoxy resin by which hardened products extremely excellent in mechanical properties at high temperatures are obtained.

According to the present invention the epoxy resin is mixed with a triamine hardening agent represented by the general formula:

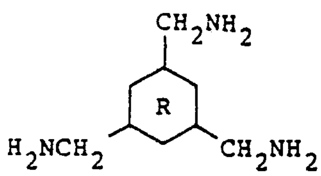 (wherein 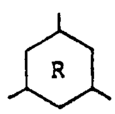 represents 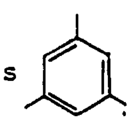 or 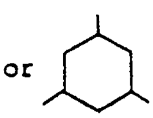),

the triamine hardening agent being used in an amount of 0.1—2 times of the number of amine equivalent divided by epoxy equivalent. 1,3,5-tris(aminomethyl)benzene (MTA) can be produced by reducing, in the presence of a catalyst such as Raney nickel, a starting material of 1,3,5-tricyanobenzene obtained by ammoxydation of mesitylene. 1,3,5-Tris(aminomethyl)cyclohexane ($H_6MTA$) can be produced by further reducing aromatic ring of the MTA in the presence of a reducing catalyst. Moreover, $H_6MTA$ can also be obtained directly from 1,3,5-tricyanobenzene by reducing cyano groups and aromatic ring at once.

Thus obtained $H_6$ MTA includes both the cis and trans types and cis type is thermally stabler than trans type. Therefore, $H_6MTA$ high in proportion of cis type is preferred and the proportion of the cis type is preferably at least 60 mol.%.

The used hardening agents MTA and $H_6MTA$ are six-functional amines i. d. that they have six active hydrogens in the total. Each active hydrogen can react with one epoxy group.

In contrast thereto 1,3-bis(aminomethyl)benzene (XDA) and 1,3-bis(aminomethyl)cyclohexane ($H_6XDA$) are four-functional hardening agents in the same way of thinking.

Generally speaking, linear polymer is produced when a raw material having two functional groups is hardened using a hardening agent having two functional groups; while network structured is produced when hardening is made by use of a hardening agent having *three or more* functional groups. The network structured polymer is superior to the linear polymer with respect to heat resistance. Properties of such network structured products are not influenced by number of functional groups but greatly by molecular structure of hardening agents and coupling conditions with epoxy resins. It is hard to foresee heat stability

on the basis of number of functional groups when hardening agents employed have more than three functionalities.

Heat distortion temperatures of epoxy resin when MTA and $H_6MTA$ are employed and when XDA and $H_6XDA$ are employed were measured according to ASTM D684—56. It was found that

1. heat distortion temperature of epoxy resin obtained when MTA is employed as a hardening agent is 29—47°C higher than that when XDA is employed, and

2. heat distortion temperature of epoxy resin obtained when $H_6MTA$ is employed is 27—48°C higher than that when $H_6XDA$ is employed.

Further the modulus of elasticity of hardened epoxy resins were measured according to ASTM D790—70. The modulus were measured at 150°C. It was found that epoxy resin obtained when using XDA or $H_6XDA$ can hardly stand at 150°C but that obtained when using hardening agent according to the invention has excellent performance in heat resistance even at 150°C.

From the above follows, that the triamines used according to the invention are not only improved as regards the heat distortion temperature but are also superior as regards the modulus of elasticity, and show improved properties even at 150°C, so that they may be used even at high temperatures.

These MTA and $H_6MTA$ hardening agents may be used alone or in admixture and moreover may also be used in combination with other known hardening agents. For example, the hardening agents of the present invention may be used in combination with aliphatic or aromatic polyamines and various modified products thereof, polyamides, imidazoles, mercaptans, phenols, various acid anhydrides, $BF_3$ complex compounds, etc. Furthermore, MTA and $H_6MTA$ may be modified with organic acids, epoxy compounds, etc. Moreover, prepolymers having diamines at both terminals may also be used as hardening agents. Such prepolymers can be obtained by modifying MTA and $H_6MTA$ with a bisphenol A type epoxy resin. For example, one mole of diglycidyl ether of bisphenol A is reacted with two or more moles of MTA or $H_6MTA$ to obtain a prepolymer.

The hardening agents of the present invention may be added to the bisphenol A type epoxy resin as they are or may be dissolved in a solvent such as toluene and then added as a solution to epoxy resins. The hardening time may be suitably adjusted according to such way of addition.

If necessary, various additives may also be added. For example, there may be added inorganic fillers such as metal powder, silica, zinc oxide, titanium oxide, magnesium oxide, calcium oxide, calcium carbonate, aluminum sulfate, talc, clay, alumina white, bariuym sulfate, calcium sulfate, pumice powder, asbestos, diatomaceous earth, glass fiber, mica, molybdenum disulfide, carbon black, graphite, lithopone, etc., phenolic resins, petroleum resins, phthalic esters, other various pigments, etc.

The triamine hardening agents of the present invention are used in an amount of 0.1—2 times, preferably 0.5—1.5 times the number of amine equivalent of the triamine divided by epoxy equivalent.

The bisphenol A type epoxy resins hardened with the hardening agents of the present invention exhibit extremely high heat distortion temperatures. Furthermore, vapor pressure of the hardening agents per se is, for example, about 1/20 (20°C) of m-xylylenediamine which is the ordinarily used hardening agent so that the hardening agents of the present invention are very useful hardening agents with high safety.

The bisphenol A type epoxy resins hardened with the hardening agents of the present invention may be effectively used as, for example, paints, adhesives, case materials, coating agents, electrical insulating materials, etc.

### Example 1

Each of 100 g of bisphenol A type epoxy resin (Trade name Epikote 828) having an epoxy equivalent of 188.7 and 87.5 g of MTA was heated to 60°C and they were quickly mixed. To this mixture was further added 500 g of bisphenol A type epoxy resin of room temperature and they were intimately mixed. Thereafter, the mixture was deaerated under reduced pressure of 1.33 kPa, then subjected to procedures necessary for ordinary casting and poured into a mold. After about 21 minutes heat was abruptly generated and a slightly yellow transparent cast plate was obtained. Properties of thus obtained cast plate are shown in Table 1.

### Example 2

To 600 g of the same epoxy resin as used in Example 1 was added 90.8 g of $H_6MTA$ and they were homogeneously mixed. Then, the mixture was cast in accordance with usual procedures. In about 25 minutes after casting, heat generation occurred and colorless and transparent cast plate was obtained. Properties of thus obtained cast plate are shown in Table 1.

### Comparative Example 1

600 g of the same epoxy resin as used in Example 1 was mixed with 108.2 g of xylylenediamine (XDA) and the mixture was cast in the same manner as in Example 2. After about 75 minutes, the mixture was hardened with generation of heat to obtain a slightly yellow cast plate.

### Comparative Example 2

Casting was effected in the same manner as in Comparative Example 1 except that XDA was substituted by 113.0 g of bis(aminomethyl)cyclohexane ($H_6XDA$). After about 83 minutes, the mixture was

hardened with generation of heat to obtain a colorless and transparent cast plate.

TABLE 1

| | After-cure* conditions | Bending strength (ASTM D–790) | | Heat distortion temperature (°C) (ASTM D–648) |
|---|---|---|---|---|
| | | Kg/mm² | Elastic modulus (Kg/mm²) | |
| Example 1 | (A)<br>(A) + (B)<br>(C) | 14.22<br>–<br>– | 341<br>–<br>– | 141<br>147<br>161 |
| Example 2 | (A)<br>(A) + (B)<br>(C) | 13.21<br>–<br>– | 324<br>–<br>– | 152<br>167<br>182 |
| Comparative Example 1 | (A)<br>(A) + (B) | 14.07<br>– | 318<br>– | 112<br>112 |
| Comparative Example 2 | (A)<br>(A) + (B) | 14.40<br>– | 305<br>– | 125<br>132 |

* After-cure conditions (A) : 60 hours at room temperature and subsequently 3 hours at 120°C.

(B) : 3 hours at 200°C.

(A) + (B) : First under the condition (A) and then under the condition (B).

(C) : 15 hours at room temperature and then after-cured for 3 hours at 120°C and furthermore for 6 hours at 200°C.

Example 3

Preparation of prepolymer

To 10 g of Epikote 828 (having an epoxy equivalent of 187.6) was added 14.7 g of 1,3,5-tris(aminomethyl)benzene (MTA) and they were reacted at 70°C for 3 hours to obtain a prepolymer which had a viscosity of 1700 Pa·s at 25°C.

The yellowish cast plate was obtained by mixing 50 g of Epikote 828 with 13.7 g of the prepolymer.

**Claims**

1. A method for hardening a bisphenol A type epoxy resin characterized in that the epoxy resin is mixed with a triamine hardening agent represented by the general formula:

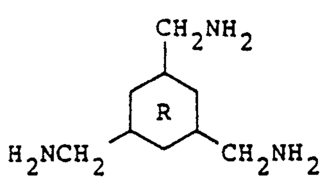 wherein 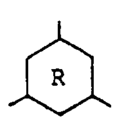 represents 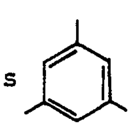 or 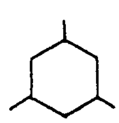

the triamine hardening agent being used in an amount of 0.1—2 times of the number of amine equivalent divided by epoxy equivalent.

2. A method according to claim 1, characterized in that a prepolymer obtained by reacting the triamine with an bisphenol A type epoxy resin is used as hardening agent.

**Patentansprüche**

1. Verfahren zur Härtung eines Epoxyharzes vom Typ Bisphenol A, dadurch gekennzeichnet, daß das Epoxyharz mit einem Triaminhärtungsmittel vermischt wird, das durch folgende allgemeine Formel dargestellt wird.

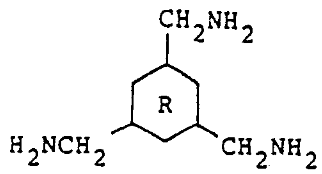 worin 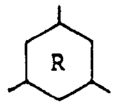 entweder 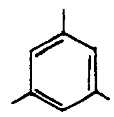 oder 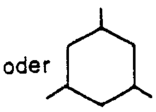

bedeutet und wobei das Triaminhärtungsmittel in einer Menge des 0,1—2 bis zweifachen der Anzahl der Aminäquivalente geteilt durch die Epoxyäquivalente verwendet wird.

2. Verfahren nach Anspruch 1, dadurch gekennzeichnet, daß ein durch Umsetzen des Triamines mit einem Epoxyharz vom Typ Bisphenol A erhaltenes Vorpolymerisat als Härtungsmittel verwendet wird.

**Revendications**

1. Une méthode pour durcir une résine bisphénole A-type époxy caractérisée en ce que la résine époxy est mélangée avec un durcisseur triamine représenté par la formule générale:

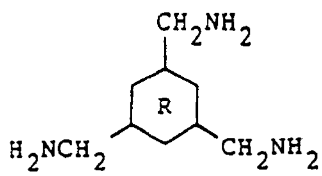 dans laquelle 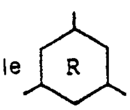 représente 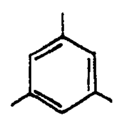 ou 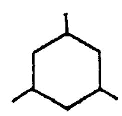

le durcisseur triamine étant utilisé dans une quantité de 0.1 à 2 fois le nombre de l'amine équivalent divisé par l'equivalent époxy.

2. Une méthode selon la revendication 1, caractérisée en ce qu'un prépolymère obtenu par la réaction du triamine avec une résine bisphénole A-type époxy est utilisé comme durcisseur.